(19) **Europäisches Patentamt**

**European Patent Office**

**Office européen des brevets**

(11) **EP 1 443 748 B1**

(12) **EUROPEAN PATENT SPECIFICATION**

(45) Date of publication and mention
of the grant of the patent:
**21.06.2006 Bulletin 2006/25**

(51) Int Cl.:
***H04N 1/52*** *(2006.01)*

(21) Application number: **03078755.0**

(22) Date of filing: **27.11.2003**

(54) **System and method for processing a multi-colour image**

System und Verfahren zur Verarbeitung eines mehrfarbigen Bildes

Système et procédé pour le traitement d'une image en plusieurs couleurs

(84) Designated Contracting States:
**AT BE BG CH CY CZ DE DK EE ES FI FR GB GR HU IE IT LI LU MC NL PT RO SE SI SK TR**

(30) Priority: **10.12.2002 EP 02080674**

(43) Date of publication of application:
**04.08.2004 Bulletin 2004/32**

(73) Proprietor: **Océ-Technologies B.V.**
**5914 CC Venlo (NL)**

(72) Inventor: **Kuiper, Paul**
**5615 NH Eindhoven (NL)**

(74) Representative: **van Meeteren, Arend Anthonie**
**Océ-Technologies B.V.**
**Corporate Patents**
**P.O. Box 101**
**5900 MA Venlo (NL)**

(56) References cited:
**EP-A- 0 637 886** **EP-A- 0 774 860**
**EP-A- 1 014 686** **WO-A-02/05545**
**US-A- 5 107 349**

**Description**

FIELD OF THE INVENTION

The present invention is related to the processing of multi-colour images for reproduction on a printing or copying system. Particularly of interest are systems for forming images composed of a plurality of colour separation images on an image-receiving member wherein the marking particles of the respective colours associated with the respective colour separation images are positioned in superimposed relationship.

BACKGROUND OF THE INVENTION

Hereinafter, reference will be made to multi-colour printing systems only although the present invention is equally applicable to digital multi-colour printing and/or copying systems. In this disclosure colour means all colours including black and white and all shades of grey. Marking particles of a limited number of colours, being the process colours, are available on each multi-colour printing system to render a colour image. In digital colour printing, continuous tones are rendered by halftoning the separation images in the process colours. The process colours are a limited number of colours of marking particles available on each multi-colour printing system to render a colour image. Usually a distinction can be made between these colour printing systems based on the kind of marking particles used, e.g. ink or toner, the imaging process employed, e.g. magnetography, or electro(photo)graphy, or inkjet, the productivity or the media range. A distinction can however also be made dependent on how the multi-colour image of marking particles is composed. In the majority of commercially available digital multi-colour printing systems, the multi-colour image of marking particles is composed of a plurality of registered colour separation images of marking particles, where the image dots of marking particles of the respective process colours associated with the respective colour separation images are superimposed and as such form a layered structure of marking particles. The marking particles pile height depends on the marking particle size, the halftoning and the number of process colours available and varies with image density. In a first halftoning approach, the colour separation image of each process colour is halftoned using a different screen for each separation image. The amount of overlap between image dots of different process colours depends on the image density and the pixel filling in sequence associated with the respective screens. A disadvantage of this approach employing a plurality of different screens is its sensitivity for creating Moiré patterns. Moiré patterns are visible distortions in a rendered multi-colour image caused by interference patterns generated by combining halftone screens. Although it is known that the visible effect of Moire patterns can be reduced by angling the halftone screens using predetermined screen angles, avoiding Moiré becomes particularly troublesome in colour printers where four or more process colours can be rendered. Therefore using a different screen for each process colour is not an option when more than four process colours are available on the colour printer to render a multi-colour image. In a second halftoning approach the same screen is used for each process colour. This approach yields maximum overlap between image dots of the respective colours and by consequence minimal area coverage. Particularly at low image densities, the images rendered according to this second approach are highly sensitive to graininess. Graininess is a perceived feature of a rendered colour which is related to how uniformly the coloured marking particles have been developed on the image receiving member.

The above-mentioned approaches have some further inherent disadvantages. Firstly, because the marking particles of the different process colours are superimposed, the total marking particles pile height can be high, particularly in full colour high density image parts. Particularly in case the marking particles are toner particles, as the size of toner particles is typically in the micrometer range, this may limit the amount of process colours which may be used to render an image as an increased number of process colours also may increase the maximum marking particles pile height. Besides the fact that a high total marking particles pile height is noticeable to the customer both visually and palpably, this may also negatively influence medium curl and transport as well as reduce the resistance against external mechanical influences such as scratches and folding. Moreover, different image compositions, e.g. different density and/or colour composition, may lead to topographic differences on the image-receiving member which reinforce some of the above mentioned disadvantages and reveal additional disadvantages, such as gloss differences between different image parts.

US 6,250,733 discloses a halftoning method employing a single screen for all colours wherein at low image density levels pixels are rendered by positioning image dots of the respective colours contiguous to each other instead of superimposed. This image dot-off-dot approach is advantageous with respect to graininess. US 6,250,733 further discloses that when the sum of the image density levels of the pixels of an image part exceeds the threshold corresponding to an ink area coverage of 100%, the remaining image density levels are rendered by superimposing image dots in a second layer of ink employing the same screen. However when this second layer of ink is applied care is taken not to impose an ink dot of the second layer on an ink dot of the first layer of the same colour. In order to enable this, once it is established that an image part has a sum of image density levels exceeding the threshold of 100% ink area coverage and thus image dots of a second layer need to be formed, the image data associated with the process colours are reconfigured such as to associate the image data with virtual colours. These virtual colours are realised by a combination of two process colours. Such combination of process colours is realised by imposing two process colours onto each other in two layers using the same screen. Using the same screen for both layers may cause undesired interference patterns, e.g. caused by registering errors.

OBJECTS OF THE INVENTION

It is an object of the invention to provide a system and method for processing digital multi-colour images for the reproduction thereof on a colour image reproduction system capable of forming registered composite multi-colour images of coloured marking particles on an image-receiving member. The digital multi-colour images should be processed such that during reproduction thereof interference patterns are avoided while limiting graininess.

It is a further object of the present invention to provide a system and method for processing digital multi-colour images for the reproduction thereof on a colour image reproduction system capable of producing full-colour images with a limited marking particles pile height.

It is still a further object of the present invention to provide a system and method for processing digital multi-colour images for the reproduction thereof on a colour image reproduction system capable of rendering images without imposing a limitation on the number of process colours.

SUMMARY OF THE INVENTION

According to the present invention, the multi-colour image of marking particles generated by a colour image reproduction system may be composed of a plurality of registered colour separation images where the marking particles of the respective colours associated with the respective colour separation images are positioned contiguous to each other as long as the print area corresponding to the image part to be reproduced is not fully covered such as to create a first layer of marking particles. If the area is fully covered and the image is not yet completed, a second and any following layer of contiguously positioned marking particles is formed on top of said first layer of image dots. This dot-off-dot approach has the advantage of, a limited graininess, a limited marking particles pile height and imposes no limitation on the number of process colours. The process colours can be any colour available in the system such as e.g. black, white, cyan, magenta, yellow, red, green, blue, orange, pink, and include light, medium or dark versions of the afore-mentioned process colours. In particular, in a first aspect of the invention, a method is disclosed for image processing a digital multi-colour image comprising the steps of:

> generating from said digital multi-colour image image signals for a selection of process colours, each image signal being associated with a digital separation image of a process colour of said selection of process colours and specifying for each pixel of said digital multi-colour image an image density value for the associated process colour; and
>
> adding up for each image part of said digital multi-colour image the image density values of all said process colours of the pixels of the image part in order to determine for each said image part a total area coverage value, CT;

if the total area coverage value of an image part exceeds 100%, the method further comprising the following steps:

> a) dividing image density values of pixels of the image part specified by the image signals in first image density values associated with a first layer of image dots of marking particles and at least second image density values associated with a second and any following layer of image dots of marking particles such that the sum of said at least second image density values corresponds to an area coverage value equal to CT-100%, and
>
> b) converting the image signals by means of a matrix-dither technique in to corresponding first printing signals and at least corresponding second printing signals, each printing signal indicating for each pixel of the image part whether an image dot of marking particles of the corresponding process colour is to be formed, said matrix-dither technique being such that each of the first printing signals is built up from a raster of a first two-dimensional matrix structure by thresholding said first image density values, while each of the second printing signals is built up from a raster of a second two-dimensional matrix structure, different from said first two-dimensional matrix structure, by thresholding said second image density values. As the raster associated with the first layer is different from the raster(s) associated with the second and any following layer, the formation of undesired interference patterns can be limited.

The image processing system may be incorporated in a computer which can be coupled by a network or any other interface to one or more image reproduction systems, such as printing and/or copying systems. The image processing system may also be part of a colour image reproduction system. The image processing system may also be part of a colour scanner provided the colour scanner can be coupled by a network or any other interface to a colour image reproduction system.

In an embodiment of the invention, at least two process colours have non-zero second image density values.

In the latter case, the method may further comprise the steps of determining a first area coverage fraction of a first process colour of said at least two process colours based on the associated first image density values, and a second area coverage fraction of said first process colour based on the associated second image density values, and a first area coverage fraction of a second process colour of said at least two process colours based on the associated first image density values, and a second area coverage fraction of said second process colour based on the associated second image density values, wherein the dividing is such that the ratio between the first area coverage fraction of the first process colour and the first area coverage fraction of the second process colour differs less than 5% from the ratio between the second area coverage fraction of the first process colour and the second area coverage fraction of the second process colour. Minimising the variation from layer to layer of the ratios between the area coverage fractions values of at least two process colours has a beneficial effect on the colour balance of the reproduced image.

In another aspect of the invention, an image processing system is disclosed for processing a digital multi-colour image comprising:

a generation module for generating from said digital multi-colour image image signals for a selection of process colours, each image signal being associated with a digital separation image of a process colour of said selection of process colours and specifying for each pixel of said digital multi-colour image an image density value for the associated process colour,

an analysis module for adding up for each image part of said digital multi-colour image the image density values of all said process colours of the pixels of the image part in order to determine for each said image part a total area coverage value, CT, and, if the total area coverage value of an image part exceeds 100%, for dividing image density values of pixels of the image part specified by the image signals in first image density values associated with a first layer of image dots of marking particles and at least second image density values associated with a second and any following layer of image dots of marking particles such that the sum of said at least second image density values corresponds to an area coverage value equal to CT-100%, and

a conversion module for converting, if CT exceeds 100%, the image signals by means of a matrix-dither technique in to corresponding first printing signals and at least corresponding second printing signals, each printing signal indicating for each pixel of the image part whether an image dot of marking particles of the corresponding process colour is to be formed, said matrix-dither technique being such that each of the first printing signals is built up from a raster of a first two-dimensional matrix structure by thresholding said first image density values, while each of the second printing signals is built up from a raster of a second two-dimensional matrix structure, different from said first two-dimensional matrix structure, by thresholding said second image density values.

BRIEF DESCRIPTION OF THE DRAWINGS

Figure 1 depicts a schematic representation of a colour image reproduction system according to the present invention.
Figure 2 depicts, according to an embodiment of the present invention, a schematic process flow of the image processing steps performed on the image signals associated with a digital image including the actual conversion of the image signals into printing signals.
Figure 3 depicts, according to an embodiment of the present invention, a more detailed process flow of the conversion to printing signals step (25) of fig.2.
Figure 4 depicts, according to an embodiment of the present invention, a more detailed process flow of the splitting step (26) of fig.2 wherein the image density values associated with a pixel of the digital image may be split into first and second image density values.
Fig 5a. depicts an example of a raster of a single matrix structure including threshold values used for halftoning the digital image of fig.5c by comparing the first image density values of fig.5d with the corresponding threshold values.
Fig 5b. depicts an example of a raster of a single matrix structure including threshold values used for halftoning the digital image of fig.5c by comparing the second image density values of fig.5e with the corresponding threshold values.
Fig.5c depicts a pixelised representation of digital multi-colour image including image density values for each pixel.
Fig.5d depicts the digital multi-colour image of fig.5c including only first image density values for each pixel obtained by splitting the image density values of fig.5c according to an embodiment of the present invention.
Fig.5e depicts the digital multi-colour image of fig.5c including only second image density values for each pixel obtained by splitting the image density values of fig.5c according to an embodiment of the present invention.
Fig.5f depicts a pixelised representation of a reproduction of the multi-colour image of fig.5c according to an embodiment of the present invention. The process colours with subscription 1 are image dots formed in a first layer; the process colours with subscription 2 are image dots formed in a second layer.
Figure 6 depicts, according to an embodiment of the present invention, a schematic process flow of image processing steps performed on the image signals associated with a pixel of a digital image for the conversion in to printing signals.

DETAILED DESCRIPTION OF THE INVENTION

In relation to the appended drawings, the present invention is described in detail in the sequel. Several embodiments are disclosed. It is apparent however that a person skilled in the art can imagine several other equivalent embodiments or other ways of executing the present invention, the scope of the present invention being limited only by the terms of the appended claims.

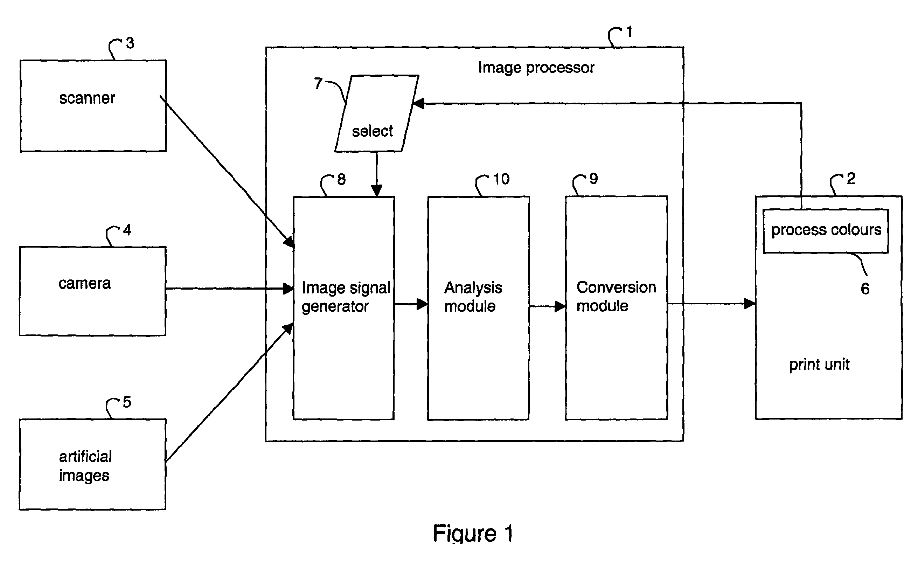

According to a preferred embodiment of the invention, a digital image reproduction system, i.e. a colour printing and/or copying system, as depicted in figure 1 comprises an image processing system (1) and a printing unit (2). A digital multi-colour image may be offered to the digital image reproduction system for reproduction thereof. There are numerous ways to generate a digital image. For instance, a digital image may be generated by scanning an original using a scanner (3). The scanner can be part of the digital image reproduction system or may be coupled via a network or any other interface to the digital image reproduction system. Digital still images may also be generated by a camera or a video camera (4) which may be coupled via a network or any other interface, e.g. an IEEE1394 interface, to the digital image reproduction system. Besides digital images generated by a scanner or a camera, which are usually in a bitmap format or a compressed bitmap format also artificially created, e.g. by a computer program, digital images or documents (5) may be offered to the digital image reproduction system. The latter images are usually in a structured format including but not limited to a page description language (PDL) format and an extensible markup language (XML) format. Examples of a PDL format are PDF (Adobe), PostScript (Adobe), and PCL (Hewlett-Packard). Regardless of the origin of the digital image one may opt to store the digital image in a memory such that it can be easily retrieved by the image processing system either directly or via any interface.

The image signal generator (8) of the image processing system generates a sequence of image signals for a selection of process colours (7). The process colours (6) correspond to the colours of the marking particles available in the printing unit. Examples of process colours are black, white, cyan, magenta, yellow, red, green, blue, pink, orange and include light, medium or dark versions of the afore-mentioned process colours. Any selection of process colours may be made. For instance, a selection may be made dependent on the colour gamut required to adequately reproduce the digital image and/or the desired quality level. Each image signal has a one to one relationship with a separation image of a particular process colour of the selection. The image signal specifies for each pixel of the digital image at least an image density value for the associated process colour. The image density value is typically an 8-bit value, which enables the use of 256 grey levels per process colour.

The analysis module (10) adds up for each image part of the digital image the image density values of all the selected process colours of all the pixels of the image part. The resulting number is used to determine the total area coverage value, CT, i.e. the area on the image-receiving member which would be required for rendering the total image part, when positioning the image dots of marking particles contiguous to each other, i.e. without overlap, relative to the area of the image part. Image magnification, when applicable, is corrected for when determining CT.

The conversion module (9) converts the image signals by means of a halftone technique according to the present invention and as explained in more detail further in the description, into printing signals. Each printing signal indicates for each pixel whether an image dot of marking particles of the corresponding process colour is to be formed. This indication may be done using a single bit or multi-bit value dependent on the halftoning capabilities of the printing unit. If the printing unit is capable of multi-level halftoning, a multi-bit value may be used, where the number of bits relates to the number of grey levels which can be reproduced per pixel by the printing unit. Usually the printing unit is only capable of binary halftoning or in other words a single bit value, i.e. "0" or "1", indicates whether an image dot is to be formed or not. In the remainder of this description, reference is made only to a printing unit capable only of binary halftoning. It is clear however that this invention is equally applicable to printer units capable of multi-level halftoning.

A number of process colours (6) are available on the printing unit (2). Responsive to a sequence of printing signals the printing unit (2) forms the respective separation images of marking particles of the corresponding process colour on the image-receiving member. The printing unit is such that the image dots of marking particles associated with the respective colour separation images are positioned contiguous to each other till reaching full area coverage thereby forming a first layer of marking particles. If the image part is such that CT > 100%, a second and any following layer are formed on said first layer using for at least two process colours the same area coverage ratios within each layer. When forming a layer of marking particles, a subsequent layer is only formed when reaching full area coverage. The image-receiving member can be a print medium or an intermediate member. The medium can be in web or sheet form and may be composed of e.g. paper, cardboard, label stock, plastic or textile. The intermediate member may be an endless member, such as a belt or drum, which can be moved cyclically.

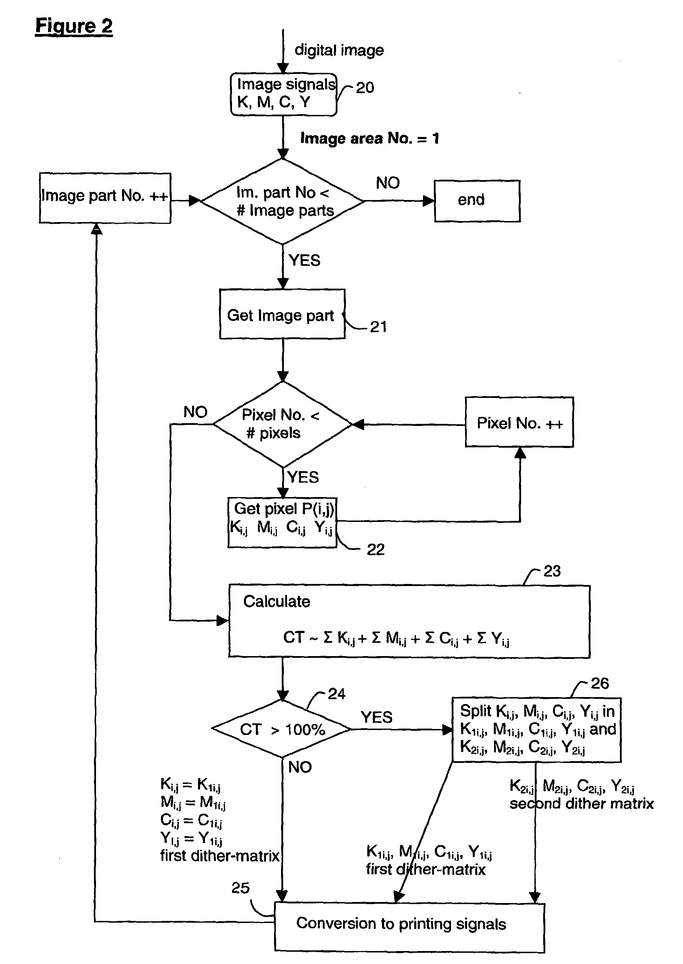

When operating an image processing unit according to an embodiment of the present invention as represented in the process flow of fig.2, a digital image is offered to the image signal generator (8). The image signal generator generates image signals (20) for a selection of process colours, each image signal being associated with a digital separation image of a process colour of said selection and specifying for each pixel of said digital image an image density value for the associated process colour. The selected process colours are cyan (C), magenta (M), yellow (Y) and black (K). A first image part (21) is selected. The size of the image part (21) may range from the size of a single pixel to the size of a complete image. For each pixel P(i,j) (22) of the image part the associated image density values for the selection of process colours are retrieved being $Y_{i,j}$, $M_{i,j}$, $C_{i,j}$, $K_{i,j}$. The image density values of all the pixels of the selected image part are added (23) in order to determine the total area coverage value, CT. For instance, for the selected image part, CT [%] may be determined as follows:

$$CT = \frac{\left(\sum Y_{ij} + \sum C_{ij} + \sum M_{ij} + \sum K_{ij}\right)\Big/ \text{\# pixels}}{T_{MAX}} \times 100$$

where $T_{MAX}$ is the maximum threshold value of the matrix structure.

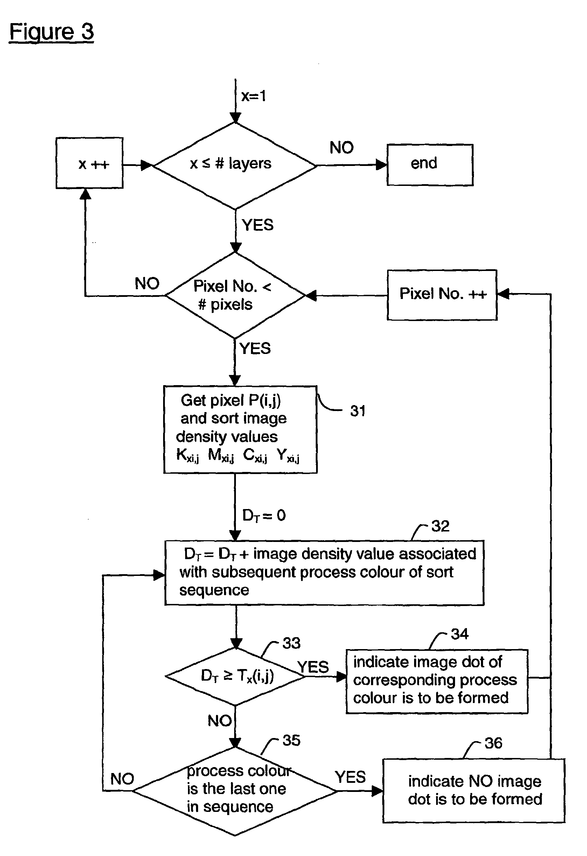

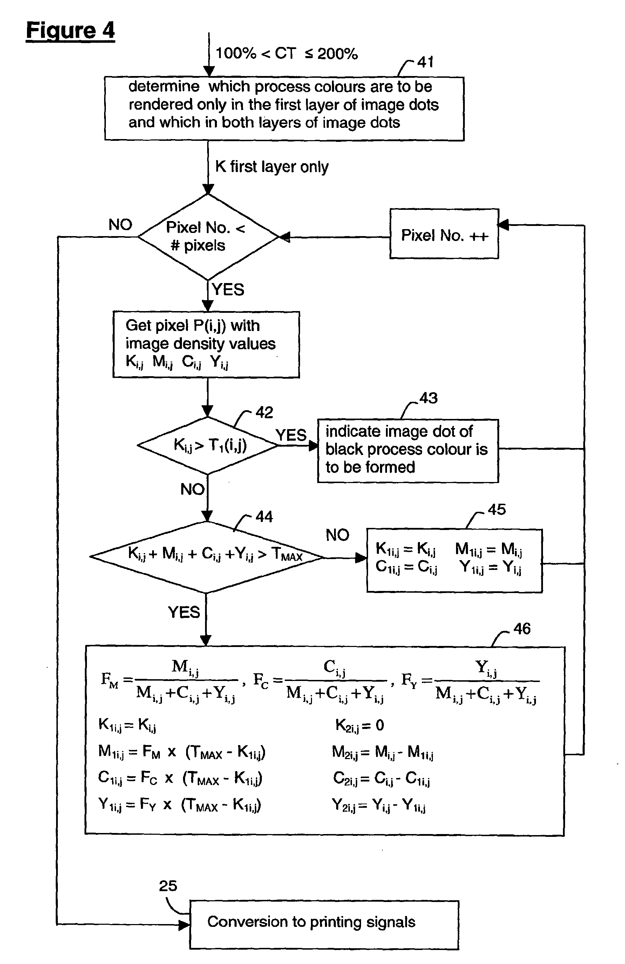

Subsequently it is determined whether the selected image part can be rendered using a single layer of image dots of marking particles by comparing (24) the CT value with the full area coverage value of 100%. If the CT value is equal to or smaller than 100% a single layer of image dots of marking particles of the respective process colours suffices to render the selected image part. In this case, as further explained in this description with reference to figure 3, the image signals are converted (25) to printing signals employing the same halftone screen for each of the process colours. A halftone screen is a raster composed of a repetitive two-dimensional matrix structure including threshold values, i.e. a dither-matrix. The threshold values may be arranged in a predetermined order. Alternately, the threshold values may be arranged randomly, i.e. a so-called stochastic dither-matrix. Each printing signal is built up from the raster of the same two-dimensional matrix structure by analysing the image density value of the associated process colour of each pixel in relation to the corresponding threshold value of said raster. The print signals may be forwarded to a printing unit where, subject to registering errors, a registered multi-colour image of dot-off-dot printed marking particles is formed on an image-receiving member. Alternatively, if the CT value exceeds 100% a single layer of image dots of marking particles is not sufficient to render the complete image part. Dependent on the CT value, at least a second layer and possible subsequent layers of marking particles of image dots may be required to render the complete image part. In case 100% < CT ≤ 200%, as also assumed in figure 2, two layers are sufficient. The image density values associated with the respective process colours, $Y_{i,j}$, $M_{i,j}$, $C_{i,j}$, $K_{i,j}$, are split (26), as explained further with reference to figure 4, into first image density values, $Y_{1i,j}$, $M_{1i,j}$, $C_{1i,j}$, $K_{1i,j}$, and second image density values, $Y_{2i,j}$, $M_{2i,j}$, $C_{2i,j}$, $K_{2i,j}$. The first image density values are used to generate (25) a first sequence of printing signals for rendering a first full coverage layer of image dots of marking particles employing a same first halftone screen. The second image density values are used to generate (25) a second sequence of printing signals for rendering a second layer of image dots of marking particles employing a same second halftone screen different from the first halftone screen. The first and second sequence of printing signals may be forwarded to a printing unit. The printing unit forms, subject to registering errors, a first layer of dot-off-dot printed marking particles of the process colours associated with said first sequence on an image-receiving member using said first sequence of printing signals, and a second layer of dot-off-dot printed marking particles of the process colours associated with said second sequence on said first layer.

Figure 3 is a flow diagram of an implementation of how the image signals associated with an image part of the digital image can be converted into printing signals (reference 25 in figure 2). At the start of the conversion the area coverage value of the image part and thus also the number of layers required to render the image part is known. For each layer, the associated image density values for each pixel of the digital image are inputted in the conversion routine. Starting with the first pixel of the image part, the image density values associated with this pixel and required to generate the corresponding layer are retrieved and sorted (31) according to a predetermined sequence of process colours. The sort sequence may be such that the process colours are ordered with decreasing contrast value. The image signal associated with the process colour with the highest contrast value is converted first. In this case, black (K) is converted first followed by magenta (M), cyan (C), and finally yellow (Y). The human eye is the most sensitive for the process colours with the highest contrast. Although the invention is in no way limited to the ordering of the process colours with decreasing contrast, such ordering is particularly beneficial when halftoning employing a stochastic dither-matrix as stochastic dither-matrices result in the best distribution of rendered pixels for the low image density values. After the image density values associated with the pixel are sorted, it is determined whether an image dot of marking particles is to be formed and if so, which process colour is to be used. This can be done as follows. An overall image density value for the pixel, $D_T$, is defined (32). At start $D_T$ equals the image density value associated with the first process colour in the sequence of process colours. As this is black, $D_T = K_{xi,j}$. Each layer has an associated raster composed of a repetitive pattern of a two-dimensional matrix structure. Within each layer, the same raster is used for each process colour. $D_T$ is compared (33) with the corresponding threshold value of the associated raster, $T_{xi,j}$. When the value of $D_T$ exceeds this threshold value, it is indicated that an image dot of marking particles of the corresponding colour, in casu black, is to be formed. When the value of $D_T$ is equal to or smaller than this threshold value, it is determined whether the process colour is the last one in the sequence (35). As the process colour is black, this is not yet the case. Therefore the image density value associated with the subsequent process colour (magenta) is added to $D_T$ (32). Again $D_T$ is compared (33) with the same corresponding threshold value of the associated raster. When the value of $D_T$ exceeds this threshold value, it is indicated that an image dot of marking particles of the corresponding colour, in casu magenta, is to be formed, when not the image density value of the subsequent process colour, cyan, is added to $D_T$. This sequence of steps is repeated till either it is indicated that an image dot of the corresponding colour is to be formed (34) or the last process colour in the sequence is reached (35) without having exceeded the threshold value. In the latter case it is indicated (36) that no image dot of marking particles is to be formed. After it is indicated whether an image dot is to be formed or not, the image density values associated with the next pixel, if any, are retrieved. When this is repeated for all pixels of the image part, the whole sequence is reiterated for each subsequent layer, if any, till the complete image part is converted into printing signals.

Further according to an embodiment of the present invention, fig.4 shows an implementation of how the image signals associated with an image part are split (reference (26) of figure 2) in order to enable a conversion to printing signals for forming multiple layers of image dots of marking particles dependent on the value of CT. According to the present invention, in order to have a beneficial effect on the colour balance of the reproduced image, it is aimed to perform the halftoning such that the variation from layer to layer of the ratios between the area coverage fractions values of at least two process colours is minimised. In fig.4 it is assumed that 100% < CT $\leq$ 200%, as also assumed in figure 2, and therefore the image signals are split in order to generate two layers of image dots. This may be done as follows. Firstly, it is determined which process colours are to be rendered only in the first layer of image dots and which in both layers (41). In the implementation as of fig.4, the black colour is rendered only in the first layer, while magenta, cyan and yellow are split between both layers. Rendering the process colour with the highest contrast value in the first layer only may have a beneficial effect on the colour balance of the reproduced image. For each pixel it is determined whether solely a black image dot is to be formed. This is done by comparing (42) the associated image density value with the corresponding threshold value of the first dither matrix structure. When the image density value exceeds the threshold value, it is indicated that an image dot of the black process colour is to be formed (43). Subsequently, the next pixel of the image part is processed. In case the image density value does not exceed the threshold value, it is determined whether the sum of image density values associated with the pixel exceeds $T_{MAX}$ (44). $T_{MAX}$ is the maximum threshold value of the first dither matrix. In case the sum of image density values associated with the pixel does not exceed the maximum threshold value, it will be determined whether an image dot of marking particles of the first layer is to be formed. This evaluation will be performed for the first layer only by converting (25) the image signals associated with the pixel (45) in print signals using the first dither mask as e.g. in fig.3. In case the sum of image density values associated with the pixel does exceed the maximum threshold value, pixel area coverage fraction values for magenta, cyan and yellow, i.e. the process colours which are both rendered in the first and the second layer, are calculated (46). Subsequently, the associated image density values are divided (46) into first image density values, i.e. image density values associated with the first layer, and second image density values, i.e. image density values associated with the second layer. Both the first and the second image density values for magenta, cyan and yellow are calculated such that ratios between the area coverage fractions of magenta, cyan and yellow are about the same within both layers. Once this calculation is performed for all pixels of the image part, the image signals associated with the first image density values are converted in a first sequence of printing signals (25) for rendering the first layer of image dots of marking particles, while the image signals associated with the second image density values are converted in a second sequence of printing signals (25) for rendering the second layer of image dots of marking particles.

Example

With reference to the drawings, by means of an example it will be described how a digital multi-colour image can be reproduced employing a halftoning technique according to an embodiment of the present invention. Suppose for instance that an original multi-colour image is scanned at a resolution of 600dpi x 600dpi resulting in a digital multi-colour image being composed of three separation images respectively of the colours red (R), green (G) and blue (B). The image signals associated with the respective separation images specify for each pixel of the respective colour an image density value using an 8-bit representation. An 8-bit representation enables to define 256 levels each corresponding with a particular tonal value. This digital multi-colour image is forwarded to a digital colour printing system. Suppose a selection of 4 process colours is made being black (K), cyan (C), magenta (M) and yellow (Y). The image signal generation module of the image processor converts the three image signals associated with the separation images of the RGB colours into four image signals associated with the separation images of the selected process colours, being CMYK. Known colour management techniques may be used in order to render the colours of the original adequately. When appropriate, with known techniques also the raster may be adapted during the conversion preferably such that the pixel size of the separation images of the process colours matches the image dot size of the printing unit. In this example the pixel size of the scanned image, being about 42 $\mu$m x 42 $\mu$m or an image resolution of 600 dpi x 600 dpi, corresponds to the minimal pixel size which can be rendered by the printing unit, as the printing unit is capable of printing with a resolution of 600 dpi x 600dpi.

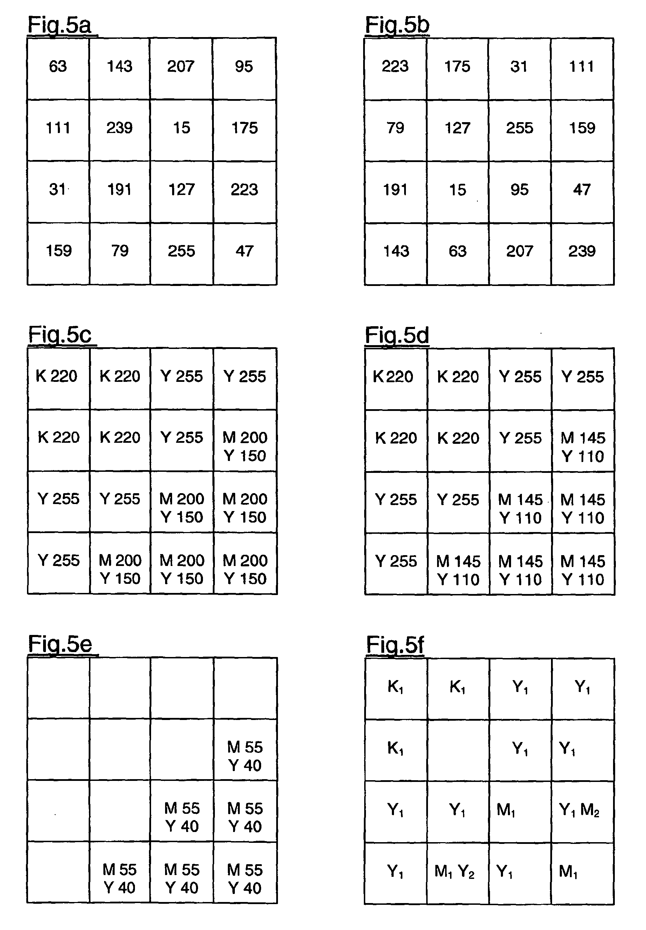

A printing signal associated with a separation image of a process colour is generated by comparing for each pixel the image density value of the associated process colour with a threshold value in a corresponding cell of the raster. The raster is a repetitive pattern of a matrix structure. The size of each cell of the matrix corresponds to the minimum image dot size which can be rendered by the printing unit. An arbitrary example of such a matrix structure, having 16 cells, is described in fig. 5a. In practice usually larger matrices are used allowing rendering more tonal values. Any distribution of threshold values between the minimum and maximum image density may be selected. The threshold values may be arranged in a predetermined order or randomly.

Suppose further by means of example that a digital image (see fig.5c) is processed having an area of the same size as the raster of a single matrix structure as in fig.5a and that the image parts thereof correspond with pixels. The maximum threshold value of the first dither matrix (Fig.5a) is 255. The total area coverage value (CT) of an image part, in casu a pixel, is based on the value obtained by adding up the image density values of the respective process colours. CT exceeds 100% coverage if this sum of image density values exceeds 255. The first image part of the digital image is a pixel having a non-zero image density value for the black colour only, being 240 (upper left corner of fig.2c). Therefore the CT value is clearly below 100% coverage. This means, when using the process flow of Fig.3, that the numbers of layers equals 1. In this example, the sort sequence (31) of the process colours for each pixel of the image is the same, being K, M, C, and finally Y. At start $D_T$ equals the image density value associated with the first process colour in the sequence of process colours. As this is black, $D_T$ = 240. The raster associated with the first layer is the raster of Fig.5a. $D_T$ is compared (33) with the corresponding threshold value of the associated raster being 63 As the value of $D_T$ exceeds this threshold value, it is indicated that an image dot of marking particles of the corresponding colour, in casu black, is formed. This is visualised in fig.5f (upper left corner). This sequence of steps is repeated for the subsequent pixels. Within each layer, the same raster is used for each process colour. An empty cell in fig.5f indicates that no image dot is formed. The fourth pixel of the second row in fig.2c has an associated image density value for the magenta colour of 200 and for the yellow colour of 150. Adding up these values yield a value of 350 which clearly exceeds the maximum threshold value of 255 or in other words CT exceeds 100% (24). The image density values of the respective process colours $M_{i,j}$, $Y_{i,j}$ associated with the pixel are split (26), as explained further with reference to figure 4, into first image density values $M_{1i,j}$, $Y_{1i,j}$ (fig.5d) and second image density values $M_{2i,j}$, $Y_{2i,j}$ (fig.5e). As $M_{i,j}+Y_{i,j}>255$ (44), one can calculate (46) the first image density values $M_{1i,j}= 0,57$ x $255=145$, $Y_{1i,j}= 0,43$ x $255=110$ and the second image density values $M_{2i,j}= 200-145=55$, $Y_{2i,j}= 150-110=40$. For the conversion into printing signal, again the process flow of fig.3 is used. For the first layer, at start $D_T$ equals the image density value associated with the first process colour in the sequence of process colours. As this is black, $D_T = 0$. The raster associated with the first layer is the raster of Fig.5a. $D_T$ is compared (33) with the corresponding threshold value of the associated raster being 175. As the value of $D_T$ is smaller than this threshold value, it is determined whether the process colour is the last one in the sequence (35). As the process colour is black, this is not yet the case. Therefore the image density value associated with the subsequent process colour (magenta) is added to $D_T$ (32). Again $D_T$, which now equals 145, is compared (33) with the same corresponding threshold value of the associated raster, being 175. Still the value of $D_T$ does not exceed this threshold value. Therefore also the value for the yellow process colour, being 110, is added to $D_T$, which then clearly exceeds the threshold value. Consequently, as also indicated in fig.5e, a yellow image dot is formed in the first layer. For the second layer, at the first non zero value of $D_T$ equals the image density value associated with the magenta process colour, being 55. The raster associated with the second layer is the raster of Fig.5b. $D_T$ is compared (33) with the corresponding threshold value of the associated raster being 159. As the value of $D_T$ is smaller than this threshold value, the non-zero image density value associated with the subsequent process colour (yellow) is added to $D_T$ (32). Again $D_T$, which now equals 95, is compared (33) with the same corresponding threshold value of the associated raster, being 159. Still the value of $D_T$ does not exceed this threshold value. As this process colour is the last one in the sequence no image dot is formed in the second layer for this pixel.

In theory, employing the simplified process flow of this example, it is possible to obtain two image dots of the same process colour upon each other. However, in practical embodiments proper care is taken in order to avoid this while ensuring that the ratios between the area coverage fractions of the respective process colours rendered in multiple layers are not affected and that the appropriate amount of each colour is rendered.

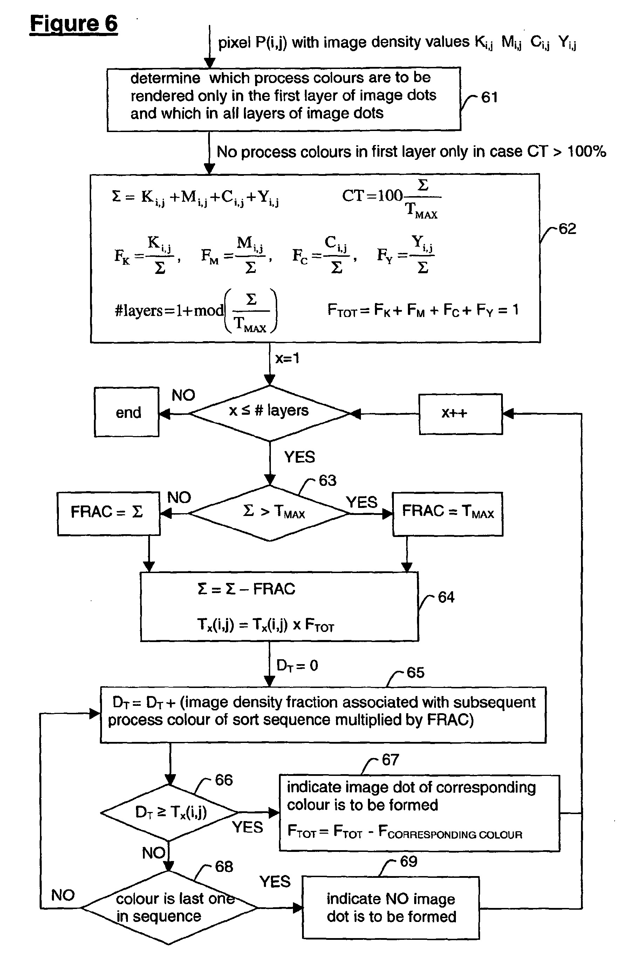

Further according to another embodiment of the present invention, fig.6 shows an implementation of how the image signals associated with an image part having the size of a single pixel are converted to printing signals for forming (a) layer(s) of image dots of marking particles dependent on the value of CT. According to the present invention, in order to have a beneficial effect on the colour balance of the reproduced image, it is aimed to perform the halftoning such that the variation from layer to layer of the ratios between the area coverage fractions values of at least two process colours is minimised. Therefore, it is determined which process colours are to be rendered only in the first layer of image dots and which in all layers (61). In the implementation as of fig.6, all process colours, being in this case black, magenta, cyan and yellow, are to be rendered in all layers. The sum, $\Sigma$, of all image density values associated with the pixel is determined in order to calculate the total area coverage value, CT, the respective process colour fractions and the number of layers required to render the pixel. Each layer has an associated screen, i.e. a raster of a repetitive matrix structure including threshold values. In case multiple layers are required to render the pixel, i.e. when CT exceeds 100%, the respective matrix structures associated with the respective layers are different from one another. Although not required, for reasons of simplicity, the maximum threshold value, $T_{MAX}$, of the matrix structure is assumed to be identical for the respective screens associated with the respective layers. Let us assume by means of example that CT exceeds 100%. Starting with the first layer, it is determined (63) whether $\Sigma$ exceeds $T_{MAx}$ or not. As CT exceeds 100%, indeed $\Sigma > T_{MAX}$ and thus the variable FRAC is set equal to $T_{MAX}$. The variable FRAC is introduced in order to facilitate the division of the image density values of the respective colours associated with the pixel over the respective layers. After the image density values associated with the pixel are sorted, it is determined whether an image dot of marking particles is to be formed and if so, which process colour is to be used. This can be done as follows. An overall image density value for the pixel, $D_T$, is defined (65). At start $D_T$ equals image density fraction associated with the first process colour in the sequence of process colours corresponding to the first layer. This image density fraction is determined as the product of the are coverage fraction of the corresponding process colour and FRAC. Doing so has the advantage that the ratios between the image density fractions of the process colours within each layer are about the same. As the first process colour is black, $D_T = F_K$ x FRAC. Each layer has an associated raster composed of a repetitive pattern of a two-dimensional matrix structure. Within each layer, the same raster is used for each process colour. $D_T$ is compared (66) with the corresponding threshold value of the associated raster, $T_{xi,j}$. When the value of $D_T$ exceeds this threshold value, it is indicated (67) that an image dot of marking particles of the corresponding colour, in casu black, is to be formed. When the value of $D_T$ is equal to or smaller than this threshold value, it is determined whether the process colour is the last one in the sequence (68). As the process colour is black, this is not yet the case. Therefore the image density fraction associated with the subsequent process colour (magenta) is added to $D_T$ (65). Again $D_T$ is compared (66) with the same corresponding threshold value of the associated raster. When the value of $D_T$ exceeds this threshold value, it is indicated that an image dot of marking particles of the corresponding colour, in casu magenta, is to be formed, when not, the image density fraction of the subsequent process colour, cyan, is added to $D_T$. This sequence of steps is repeated till either it is indicated that an image dot of the corresponding colour is to be formed (67) or the last process colour in the sequence is reached (68) without having exceeded the threshold value. In the latter case it is indicated (69) that no image dot of marking particles is to be formed. As in this example, it is supposed that CT exceeds 100%, for a particular process colour, dependent on the threshold value and values of the respective image density fractions, it is indicated that an image dot is to be formed. $F_{TOT}$, being the sum of all area coverage fractions of all process colours associated with the pixel, is subsequently corrected (67) for the fact that a particular coloured dot will be formed. When processing the second or subsequent layer, again it is determined for the or each layer whether the new value of $\Sigma$ exceeds $T_{MAX}$, or in other words, e.g. in case of a second layer whether CT exceeds 200% or e.g. in case of a third layer whether CT exceeds 300%. In order to determine whether an image dot of marking particles for the respective layer is to be formed and if so, which process colour is to be used, $D_T$ is set equal to the image density fraction associated with the first process colour in the sequence of process colours corresponding to the second or any following layer. It is however prevented that an image dot of a process colour which will be rendered in (a) preceding layer(s) can be formed at the same pixel position. Then $D_T$ is compared with the threshold value corresponding to the pixel position (i,j) in the screen associated with the second layer or any following layer. The screen associated with the second or any following layer is a raster of a repetitive matrix structure including threshold values, wherein this matrix structure is different from the matrix structure of the screen associated with the first layer. The threshold value corresponding to the pixel position (i, j) in the screen associated with the second or any following layer is however multiplied with the corrected $F_{TOT}$. In particular, the threshold value is lowered, thereby increasing the chance that an image dot of a process colour different from the colour(s) rendered in the preceding layers(s) will be rendered in (a) subsequent layer(s). Doing so advantageously takes into account the effect of process colours which will be rendered in preceding layers on the amount of colour to be rendered and ensures that the proper amount of colour will be effectively be rendered.

**Claims**

1. A method for image processing a digital multi-colour image comprising the steps of:

   generating from said digital multi-colour image image signals for a selection of process colours, each image signal being associated with a digital separation image of a process colour of said selection of process colours and specifying for each pixel of said digital multi-colour image an image density value for the associated process colour; and

adding up for each image part of said digital multi-colour image the image density values of all said process colours of the pixels of the image part in order to determine for each said image part a total area coverage value, CT;

if the total area coverage value of an image part exceeds 100%, the method being **characterised by** further steps of:

a) dividing image density values of pixels of the image part specified by the image signals in first image density values associated with a first layer of image dots of marking particles and at least second image density values associated with a second and any following layer of image dots of marking particles such that the sum of said at least second image density values corresponds to an area coverage value equal to CT-100%, and
b) converting the image signals by means of a matrix-dither technique in to corresponding first printing signals and at least corresponding second printing signals, each printing signal indicating for each pixel of the image part whether an image dot of marking particles of the corresponding process colour Is to be formed, said matrix-dither technique being such that each of the first printing signals is built up from a raster of a first two-dimensional matrix structure by thresholding said first image density values, while each of the second printing signals is built up from a raster of a second two-dimensional matrix structure, different from said first two-dimensional matrix structure, by thresholding said second image density values.

2. The method as recited in claim 1, wherein at least two process colours have non-zero second image density values.

3. The method as recited in claim 2, further comprising the steps of determining a first area coverage fraction of a first process colour of said at least two process colours based on the associated first image density values, and a second area coverage fraction of said first process colour based on the associated second image density values, and a first area coverage fraction of a second process colour of said at least two process colours based on the associated first image density values, and a second area coverage fraction of said second process colour based on the associated second image density values, wherein the dividing is such that the ratio between the first area coverage fraction of the first process colour and the first area coverage fraction of the second process colour differs less than 5% from the ratio between the second area coverage fraction of the first process colour and the second area coverage fraction of the second process colour.

4. The method as recited in any preceding claim, wherein the dividing is such that a pixel has only an associated non-zero second image density value if the sum of image density values associated with said pixel is greater than the maximum threshold value of said first matrix structure.

5. The method as recited in claim 4, further comprising the step of selecting at least one process colour which is rendered in the first layer only.

6. The method as recited in any preceding claim, further comprising the steps of sorting the image density values associated with each pixel such that the process colours are ordered with decreasing contrast value.

7. The method as recited in any preceding claim, wherein the image part comprises a single pixel.

8. An image processing system for processing a digital multi-colour image comprising:

a generation module for generating from said digital multi-colour image image signals for a selection of process colours, each image signal being associated with a digital separation image of a process colour of said selection of process colours and specifying for each pixel of said digital multi-colour image an image density value for the associated process colour, and
an analysis module for adding up for each image part of said digital multi-colour image the image density values of all said process colours of the pixels of the image part in order to determine for each said image part a total area coverage value, CT,

**characterised in that**

the analysis module is also suited for dividing, if the total area coverage value of an image part exceeds 100%, image density values of pixels of the image part specified by the Image signals In first image density values associated with a first layer of image dots of marking particles and at least second Image density values associated with a second and any following layer of image dots of marking particles such that the sum of said at least second image density values corresponds to an area coverage value equal to CT-100%, and

the system further comprises a conversion module for converting, if CT exceeds 100%, the image signals by means of a matrix-dither technique in to corresponding first printing signals and at least corresponding second printing signals, each printing signal indicating for each pixel of the image part whether an image dot of marking particles of the corresponding process colour is to be formed, said matrix-dither technique being such that each of the first printing signals is built up from a raster of a first two-dimensional matrix structure by thresholding said first image density values, while each of the second printing signals Is built up from a raster of a second two-dimensional matrix structure, different from said first two-dimensional matrix structure, by thresholding said second image density values.

**Patentansprüche**

1. Verfahren zur Bildverarbeitung eines digitalen mehrfarbigen Bildes, mit den folgenden Schritten:

Erzeugung von Bildsignalen für eine Auswahl von Prozeßfarben anhand des digitalen mehrfarbigen Bildes, wobei jedes Bildsignal mit einem digitalen Farbauszugsbild für eine Prozeßfarbe aus der genannten Auswahl der Prozeßfarben verknüpft ist und für jedes Pixel des digitalen mehrfarbigen Bildes einen Dichtdichtewert für die betreffende Prozeßfarbe spezifiziert; und

Aufaddieren, für jeden Bildteil des digitalen mehrfarbigen Bildes, der Bilddichtewerte aller Prozeßfarben der Pixel aus dem Bildteil, um für jeden dieser Bildteile einen Gesamt-Flächenbedeckungswert CT zu bestimmen;

wobei, wenn der Gesamt-Flächenbedeckungswert eines Bildteils 100% überschreitet, das Verfahren weiterhin **gekennzeichnet ist durch** die folgenden Schritte:

a) Aufteilen der Bilddichtewerte von Pixeln des **durch** die Bildsignale spezifizierten Bildteiles in erste Bilddichtewerte für eine erste Lage von Bildpunkten aus markierenden Partikeln und wenigstens zweite Bilddichtewerte für eine zweite und etwaige folgende Lagen von Bildpunkten aus markierenden Partikeln, derart, daß die Summe der wenigstens zwei Bilddichtewerte einem Flächenbedeckungswert entspricht, der gleich CT-100% ist, und

b) Konvertieren der Bildsignale mit Hilfe einer Matrix-Dithertechnik in entsprechende erste Drucksignale und wenigstens entsprechende zweite Drucksignale, wobei jedes Drucksignal für jedes Pixel des Bildteils angibt, ob ein Bildpunkt aus markierenden Partikeln der betreffenden Prozeßfarbe zu bilden ist, wobei diese Matrix-Dithertechnik von der Art ist, daß jedes der ersten Drucksignale **durch** Vergleich der ersten Bilddichtewerte mit Schwellenwerten aus einem Raster mit einer ersten zweidimensionalen Matrixstruktur aufgebaut wird, während jedes der zweiten Drucksignale **durch** Vergleich der zweiten Bilddichtewerte mit Schwellenwerten aus einem Raster mit einer zweiten zweidimensionalen Matrixstruktur aufgebaut wird, die von der ersten zweidimensionalen Matrixstruktur verschieben ist.

2. Verfahren nach Anspruch 1, bei dem wenigstens zwei Prozeßfarben nicht verschwindende zweite Bilddichtewerte haben.

3. Verfahren nach Anspruch 2, mit den Schritten der Bestimmung eines ersten Flächenbedeckungsanteils einer ersten Prozeßfarbe unter den wenigstens zwei Prozeßfarben, auf der Grundlage der zugehörigen ersten Bilddichtewerte, und eines zweiten Flächenbedeckungsanteils der ersten Prozeßfarbe, auf der Grundlage der zugehörigen zweiten Bilddichtewerte, und eines ersten Flächenbedeckungsanteils einer zweiten Prozeßfarbe unter den wenigstens zwei Prozeßfarben, auf der Grundlage der zugehörigen ersten Bilddichtewerte, und eines zweiten Flächenbedeckungsanteils der zweiten Prozeßfarbe auf der Grundlage der zugehörigen zweiten Bilddichtewerte, wobei die Aufteilung von der Art ist, daß das Verhältnis zwischen dem ersten Flächenbedeckungsanteil der ersten Prozeßfarbe und dem ersten Flächenbedekkungsanteil der zweiten Prozeßfarbe sich um weniger als 5 % von dem Verhältnis zwischen dem zweiten Flächenbedeckungsanteil der ersten Prozeßfarbe und dem zweiten Flächenbedeckungsanteil der zweiten Prozeßfarbe unterscheidet.

4. Verfahren nach einem der vorstehenden Ansprüche, bei dem die Aufteilung von der Art ist, daß ein Pixel nur dann einen zugehörigen nicht verschwindenden zweiten Bilddichtewert hat, wenn die Summe von Bilddichtewerten, die zu diesem Pixel gehören, größer ist als der maximale Schwellenwert der ersten Matrixstruktur.

5. Verfahren nach Anspruch 4, mit dem weiteren Schritt der Auswahl wenigstens einer Prozeßfarbe, die nur in der ersten Lage wiedergegeben wird.

**6.** Verfahren nach einem der vorstehenden Ansprüche, mit den weiteren Schritten des Sortierens der zu jedem Pixel gehörenden Bilddichtewerte in der Weise, daß die Prozeßfarben nach abnehmenden Kontrastwerten geordnet werden.

**7.** Verfahren nach einem der vorstehenden Ansprüche, bei dem der Bildteil ein einzelnes Pixel umfaßt.

**8.** Bildverarbeitungssystem zur Verarbeitung eines digitalen mehrfarbigen Bildes, mit:

einem Generatormodul zum Generieren von Bildsignalen für eine Auswahl von Prozeßfarben aus dem digitalen mehrfarbigen Bild, wobei jedes Bildsignal mit einem digitalen Farbauszugsbild in einer Prozeßfarbe aus der Auswahl von Prozeßfarben verknüpft ist und für jedes Pixel des digitalen mehrfarbigen Bildes einen Bilddichtewert für die zugehörige Prozeßfarbe spezifiziert, und
einem Analysemodul zum Aufaddieren, für jeden Bildteil des digitalen mehrfarbigen Bildes, der Bilddichtewerte aller Prozeßfarben der Pixel aus dem Bildteil, um für jeden dieser Bildteile einen Gesamt-Flächenbedeckungswert CT zu bestimmen

**dadurch gekennzeichnet, daß**,

das Analysemodul dazu geeignet ist, wenn der Gesamt-Flächenbedeckungswert eines Bildteils 100% überschreitet, die Bilddichtewerte von Pixeln des durch die Bildsignale spezifizierten Bildteiles in erste Bilddichtewerte für eine erste Lage von Bildpunkten aus markierenden Partikeln und wenigstens zweite Bilddichtewerte für eine zweite und etwaige folgende Lagen von Bildpunkten aus markierenden Partikeln derart aufzuteilen, daß die Summe der wenigstens zwei Bilddichtewerte einem Flächenbedeckungswert entspricht, der gleich CT-100% ist, und
das System weiterhin ein Konvertierungsmodul aufweist, um, wenn CT 100% überschreitet, die Bildsignale mit Hilfe einer Matrix-Dithertechnik in entsprechende erste Drucksignale und wenigstens entsprechende zweite Drucksignale zu konvertieren, wobei jedes Drucksignal für jedes Pixel des Bildteils angibt, ob ein Bildpunkt aus markierenden Partikeln der betreffenden Prozeßfarbe zu bilden ist, wobei diese Matrix-Dithertechnik von der Art ist, daß jedes der ersten Drucksignale durch Vergleich der ersten Bilddichtewerte mit Schwellenwerten aus einem Raster mit einer ersten zweidimensionalen Matrixstruktur aufgebaut wird, während jedes der zweiten Drucksignale durch Vergleich der zweiten Bilddichtewerte mit Schwellenwerten aus einem Raster mit einer zweiten zweidimensionalen Matrixstruktur aufgebaut wird, die von der ersten zweidimensionalen Matrixstruktur verschieben ist.

**Revendications**

**1.** Procédé de traitement d'images d'une image multicolore numérique comprenant les étapes suivantes :

générer à partir de ladite image multicolore numérique, des signaux d'image pour une sélection de couleurs de traitement, chaque signal d'image étant associé à une image de séparation numérique d'une couleur de traitement de ladite sélection de couleurs de traitement et spécifier, pour chaque pixel de ladite image multicolore numérique, une valeur de densité d'image pour la couleur de traitement associée ; et
ajouter pour chaque portion d'image de ladite image multicolore numérique, les valeurs de densité d'image de toutes lesdites couleurs de traitement des pixels de la portion d'image, afin de déterminer pour chaque dite portion d'image une valeur du titre total, CT ;

si la valeur du titre total d'une portion d'image dépasse 100%, le procédé est en outre **caractérisé par** les étapes suivantes :

a) diviser les valeurs de densité d'image des pixels de la portion d'image spécifiées par les signaux d'image en des premières valeurs de densité d'image associées à une première couche de points imagés de particules de marquage et en au moins des secondes valeurs de densité d'image associées à une seconde et n'importe quelle couche suivante de points imagés de particules de marquage, de manière que la somme desdites au moins secondes valeurs de densité d'image corresponde à une valeur de titre égale à CT-100%, et
b) convertir les signaux d'image au moyen d'une technique de répartition d'erreur dans la matrice en des premiers signaux d'impression correspondants et en au moins des seconds signaux d'impression correspondants, chaque signal d'impression indiquant, pour chaque pixel de la portion d'image, si un point imagé de particules de marquage de la couleur de traitement correspondante doit être formé, ladite technique de répartition d'erreur dans la matrice étant telle que chacun des premiers signaux d'impression est établi à partir d'une trame d'une première structure matricielle bidimensionnelle en établissant un seuil pour lesdites premières valeurs de densité d'image, pendant que chacun des seconds signaux d'impression est établi à partir d'une trame d'une seconde structure matricielle bidimensionnelle, différente de ladite première structure matricielle bidimensionnelle, en établissant un seuil pour lesdites secondes valeurs de densité d'image.

2. Procédé selon la revendication 1, dans lequel les au moins deux couleurs de traitement ont des secondes valeurs de densité d'image non nulles.

3. Procédé selon la revendication 2 comprenant en outre les étapes de détermination d'une première fraction du titre d'une première couleur de traitement desdites au moins deux couleurs de traitement basées sur les premières valeurs de densité d'image associées, et une seconde fraction du titre de ladite première couleur de traitement basée sur les secondes valeurs de densité d'image associées et une première fraction du titre d'une seconde couleur de traitement desdites au moins deux couleurs de traitement basées sur les premières valeurs de densité d'image associées et une seconde fraction du titre de ladite seconde couleur de traitement basée sur les secondes valeurs de densité d'image associées, où la division est telle que le rapport entre la première fraction du titre de la première couleur de traitement et la première fraction du titre de la seconde couleur de traitement diffère de moins de 5% du rapport entre la seconde fraction du titre de la première couleur de traitement et la seconde fraction du titre de la seconde couleur de traitement.

4. Procédé selon l'une quelconque des revendications précédentes, dans lequel la division est telle qu'un pixel a uniquement une seconde valeur de densité d'image non nulle associée si la somme des valeurs de densité d'image associées audit pixel est supérieure à la valeur de seuil maximale de ladite première structure matricielle.

5. Procédé selon la revendication 4 comprenant en outre l'étape de sélection d'au moins une couleur de traitement restituée uniquement dans la première couche.

6. Procédé selon l'une quelconque des revendications précédentes comprenant en outre les étapes de tri des valeurs de densité d'image associées à chaque pixel, de sorte que les couleurs de traitement sont triées par valeur de contraste décroissante.

7. Procédé selon l'une quelconque des revendications précédentes, dans lequel la portion d'image comprend un seul pixel.

8. Système de traitement d'images pour traiter une image multicolore numérique comprenant :

un module de génération pour générer à partir de ladite image multicolore numérique, des signaux d'image pour une sélection de couleurs de traitement, chaque signal d'image étant associé à une image de séparation numérique d'une couleur de traitement de ladite sélection de couleurs de traitement et pour spécifier, pour chaque pixel de ladite image multicolore numérique, une valeur de densité d'image pour la couleur de traitement associée, et
un module d'analyse pour ajouter, pour chaque portion d'image de ladite image multicolore numérique, les valeurs de densité d'image de toutes lesdites couleurs de traitement des pixels de la portion d'image, afin de déterminer pour chaque dite portion d'image une valeur de titre total, CT, **caractérisé en ce que** le module d'analyse est également approprié pour diviser, si la valeur du titre total d'une portion d'image dépasse 100%, les valeurs de densité d'image des pixels de la portion d'image spécifiées par les signaux d'image en des premières valeurs de densité d'image associées à une première couche de points imagés de particules de marquage et en au moins des secondes valeurs de densité d'image associées à une seconde et n'importe quelle couche suivante de points imagés de particules de marquage, de manière que la somme desdites au moins secondes valeurs de densité d'image corresponde à une valeur de titre égale à CT-100%, et
le système comprenant en outre un module de conversion pour convertir, si CT dépasse 100%, les signaux d'image au moyen d'une technique de répartition d'erreur dans la matrice en des premiers signaux d'impression correspondants et en au moins des seconds signaux d'impression correspondants, chaque signal d'impression indiquant pour chaque pixel de la portion d'image si un point imagé de particules de marquage de la couleur de traitement correspondante doit être formé, ladite technique de répartition d'erreur dans la matrice étant telle que chacun des premiers signaux d'impression est établi à partir d'une trame d'une première structure matricielle bidimensionnelle en établissant un seuil pour lesdites premières valeurs de densité d'image, pendant que chacun des seconds signaux d'impression est établi à partir d'une trame d'une seconde structure matricielle bidimensionnelle, différente de ladite première structure matricielle bidimensionnelle, en établissant un seuil pour lesdites secondes valeurs de densité d'image.

Figure 1

EP 1 443 748 B1

## Figure 2

## Figure 3

## Figure 4

$100\% < CT \leq 200\%$

**41** — determine which process colours are to be rendered only in the first layer of image dots and which in both layers of image dots

K first layer only

**Pixel No. < # pixels** — NO / YES

Pixel No. ++

Get pixel P(i,j) with image density values $K_{i,j}$ $M_{i,j}$ $C_{i,j}$ $Y_{i,j}$

**42** — $K_{i,j} > T_1(i,j)$ — YES → **43** indicate image dot of black process colour is to be formed

NO

**44** — $K_{i,j} + M_{i,j} + C_{i,j} + Y_{i,j} > T_{MAX}$ — NO → **45**
$K_{1i,j} = K_{i,j}$   $M_{1i,j} = M_{i,j}$
$C_{1i,j} = C_{i,j}$   $Y_{1i,j} = Y_{i,j}$

YES

**46**

$$F_M = \frac{M_{i,j}}{M_{i,j}+C_{i,j}+Y_{i,j}} \,,\ F_C = \frac{C_{i,j}}{M_{i,j}+C_{i,j}+Y_{i,j}} \,,\ F_Y = \frac{Y_{i,j}}{M_{i,j}+C_{i,j}+Y_{i,j}}$$

$K_{1i,j} = K_{i,j}$ 　　　　　　　　 $K_{2i,j} = 0$

$M_{1i,j} = F_M \times (T_{MAX} - K_{1i,j})$ 　　 $M_{2i,j} = M_{i,j} - M_{1i,j}$

$C_{1i,j} = F_C \times (T_{MAX} - K_{1i,j})$ 　　 $C_{2i,j} = C_{i,j} - C_{1i,j}$

$Y_{1i,j} = F_Y \times (T_{MAX} - K_{1i,j})$ 　　 $Y_{2i,j} = Y_{i,j} - Y_{1i,j}$

**25** — Conversion to printing signals

## Fig.5a

| 63 | 143 | 207 | 95 |
|-----|-----|-----|-----|
| 111 | 239 | 15 | 175 |
| 31 | 191 | 127 | 223 |
| 159 | 79 | 255 | 47 |

## Fig.5b

| 223 | 175 | 31 | 111 |
|-----|-----|-----|-----|
| 79 | 127 | 255 | 159 |
| 191 | 15 | 95 | 47 |
| 143 | 63 | 207 | 239 |

## Fig.5c

| K 220 | K 220 | Y 255 | Y 255 |
|-------|-------|-------|-------|
| K 220 | K 220 | Y 255 | M 200 Y 150 |
| Y 255 | Y 255 | M 200 Y 150 | M 200 Y 150 |
| Y 255 | M 200 Y 150 | M 200 Y 150 | M 200 Y 150 |

## Fig.5d

| K 220 | K 220 | Y 255 | Y 255 |
|-------|-------|-------|-------|
| K 220 | K 220 | Y 255 | M 145 Y 110 |
| Y 255 | Y 255 | M 145 Y 110 | M 145 Y 110 |
| Y 255 | M 145 Y 110 | M 145 Y 110 | M 145 Y 110 |

## Fig.5e

| | | | |
|---|---|---|---|
| | | | M 55 Y 40 |
| | | M 55 Y 40 | M 55 Y 40 |
| | M 55 Y 40 | M 55 Y 40 | M 55 Y 40 |

## Fig.5f

| $K_1$ | $K_1$ | $Y_1$ | $Y_1$ |
|-------|-------|-------|-------|
| $K_1$ | | $Y_1$ | $Y_1$ |
| $Y_1$ | $Y_1$ | $M_1$ | $Y_1 M_2$ |
| $Y_1$ | $M_1 Y_2$ | $Y_1$ | $M_1$ |

## Figure 6

pixel P(i,j) with image density values $K_{i,j}$ $M_{i,j}$ $C_{i,j}$ $Y_{i,j}$

determine which process colours are to be rendered only in the first layer of image dots and which in all layers of image dots — 61

No process colours in first layer only in case CT > 100%

$$\Sigma = K_{i,j} + M_{i,j} + C_{i,j} + Y_{i,j} \qquad CT = 100\frac{\Sigma}{T_{MAX}}$$

$$F_K = \frac{K_{i,j}}{\Sigma}, \quad F_M = \frac{M_{i,j}}{\Sigma}, \quad F_C = \frac{C_{i,j}}{\Sigma}, \quad F_Y = \frac{Y_{i,j}}{\Sigma}$$

$$\#layers = 1 + mod\left(\frac{\Sigma}{T_{MAX}}\right) \qquad F_{TOT} = F_K + F_M + F_C + F_Y = 1$$

— 62

x=1

end ← NO — x ≤ # layers ← x++

YES

— 63

FRAC = Σ ← NO — Σ > $T_{MAX}$ — YES → FRAC = $T_{MAX}$

$$\Sigma = \Sigma - FRAC$$

$$T_x(i,j) = T_x(i,j) \times F_{TOT}$$

— 64

$D_T = 0$

$D_T = D_T +$ (image density fraction associated with subsequent process colour of sort sequence multiplied by FRAC) — 65

— 67

indicate image dot of corresponding colour is to be formed

$F_{TOT} = F_{TOT} - F_{CORRESPONDING\ COLOUR}$

— 66

$D_T \geq T_x(i,j)$ — YES →

NO

— 68

NO — colour is last one in sequence — YES →

— 69

indicate NO image dot is to be formed